# EUROPÄISCHE PATENTANMELDUNG

(11) **EP 2 131 229 A2**
(43) Veröffentlichungstag der Anmeldung: **09.12.2009**
(21) Anmeldenummer: 09007032.7
(22) Anmeldetag: 27.05.2009
(51) Int. Cl.: G02B 27/64

(54) **Vorrichtung mit einem optischen Erfassungssystem**

(30) Priorität: 05.06.2008 DE 102008026990
(71) Anmelder: Diehl BGT Defence GmbH & Co.KG, 88662 Überlingen (DE)
(72) Erfinder: Baumgart, Jörg, Professor Dr., 88634 Herdwangen-Schönach (DE); Gerd, Rau, Dr., 88690 Uhldingen (DE); Fischer, Klaus, 78355 Hohenfels (DE)
(74) Vertreter: Diehl Patentabteilung

(57) **Zusammenfassung**

Die Erfindung geht aus von einer Vorrichtung (2) mit einem optischen Erfassungssystem (4), das einen optischen Sensor (10) und optische Elemente umfasst, die ein Strahlführungssystem (8) bilden, das eine um 360° Azimutwinkel reichende Rundumsicht des Sensors (10) in eine Umgebung (26) gewährt, und mit einem optisch aktiven System (6) zum Aussenden eines Laserstrahls aus einer Laserquelle (40, 42) in die Umgebung (26).

Um das optische Erfassungssystem (4) sehr genau auf das optisch aktive System (6) abstimmen zu können, wird vorgeschlagen, dass das Strahlführungssystem (8) zum Lenken des Laserstrahls in die Umgebung (26) ausgebildet ist.

## Beschreibung

Die Erfindung betrifft eine Vorrichtung mit einem optischen Erfassungssystem, das einen optischen Sensor und optische Elemente umfasst, die ein Strahlführungssystem bilden, das eine um 360° Azimutwinkel reichende Rundumsicht des Sensors in eine Umgebung gewährt, und mit einem optisch aktiven System zum Aussenden eines Laserstrahls aus einer Laserquelle in die Umgebung.

Wenn optische Systeme auf Fahrzeugen, Flugzeugen oder Schiffen eingesetzt werden, kommt üblicherweise eine so genannte stabilisierte Plattform zum Einsatz. Sie hat die Aufgabe, die Sichtlinie des optischen Systems zu stabilisieren, auch wenn sich das Fahrzeug, das Flugzeug oder das Schiff bewegt. Hierbei ist es bekannt, das optische System in eine Hülle zu integrieren, die in Azimutrichtung relativ zur tragenden Struktur bzw. zum Fahrzeug, Flugzeug oder Schiff drehbar gelagert ist. Zusätzlich ist das optische System in einem Träger innerhalb der Hülle gelagert, der ebenfalls in Azimutrichtung drehbar ist und zusätzlich in Elevationsrichtung verkippt werden kann, sodass beispielsweise eine im Träger befestigte Kamera durch die Drehbarkeit in Azimutrichtung eine Rundumsicht und durch die Schwenkbarkeit in Elevationsrichtung in jede beliebige Richtung eines Halbraums ausgerichtet werden kann.

Zum Stabilisieren der Sichtlinie des optischen Systems ist ein Ausrichtsystem vorhanden, dessen Antriebseinheiten so ausgelegt sind, dass sie die gesamte Massenträgheit des optischen Systems, des Trägers und der Hülle ausreichend schnell bewegen können. Bei sehr schnell bewegten Fahrzeugen oder Flugzeugen kommt außerdem ein nicht unbeträchtlicher Störanteil durch aerodynamische Rückwirkungen hinzu. Bei hohen Anforderungen an die Stabilität der Sichtlinie kann daher ein zweistufiges Ausrichtsystem zum Einsatz kommen, bei dem eine erste Stufe eine Grobausrichtung des optischen Systems vornimmt. Eine zweite Stufe innerhalb des Trägers regelt die Sichtlinie des optischen Systems innerhalb der Hülle nach. Diese zweite Stufe umfasst wiederum eine in Azimutrichtung und Elevationsrichtung drehbare Lagerung, sodass zwei vollständige Ausrichtsysteme ineinander zu integrieren und regelungstechnisch aufeinander abzustimmen sind.

Besonders hohe Anforderungen an das optische System sind gestellt, wenn es ein optisches Erfassungssystem mit einer Kamera und zusätzlich ein optisch aktives System zum aktiven Richten eines optischen Strahl in eine Umgebung umfasst und diese beiden Systeme aufeinander abgestimmt werden müssen. Eine Abstimmung ist beispielsweise nötig, wenn ein Gesichtsfeld des Erfassungssystems auf ein vom aktiven System beleuchteten Fleck zu richten ist oder anders herum ein Bereich innerhalb des Gesichtsfelds des Erfassungssystems beleuchtet werden soll.

Es ist eine Aufgabe der vorliegenden Erfindung, eine Vorrichtung mit einem optischen Erfassungssystem anzugeben, mit der das optische Erfassungssystem sehr genau auf ein optisch aktives System abgestimmt werden kann.

Diese Aufgabe wird durch eine Vorrichtung der eingangs genannten Art gelöst, bei dem das Strahlführungssystem erfindungsgemäß zum Lenken des Laserstrahls in die Umgebung ausgebildet ist. Eine Korrektur der Sichtlinie des optischen Erfassungssystems durch das Strahlführungssystem kann sich identisch auf die Strahlführung des Laserstrahls aus der Laserquelle auswirken, sodass auf eine elektronische Kopplung zweier Ausrichtsysteme verzichtet werden kann. Eine Position des Laserstrahls in der Umgebung kann durch den optischen Sensor zuverlässig erfasst werden.

Die Rundumsicht des optischen Sensors erlaubt ein Ausrichten seines Gesichtsfelds in entgegengesetzte Richtungen, insbesondere nacheinander in entgegengesetzte Richtungen, wobei das Gesichtsfeld rundum schwenkbar ist. Die optischen Elemente lenken Licht aus dem Gesichtsfeld zum Sensor und sind zusätzlich dazu vorgesehen, das Laserlicht aus der Laserquelle in die Umgebung zu lenken. Der Laserstrahl ist hierbei über das Strahlführungssystem geführt, wobei das Strahlführungssystem zweckmäßigerweise den Auskoppelpunkt des optisch aktiven Systems bzw. Laserstrahl in die Umgebung bildet und auch den Einkoppelpunkt aus der Umgebung in das optische Erfassungssystem bilden kann.

In einer vorteilhaften Ausführungsform der Erfindung ist das Strahlführungssystem zum Schwenken des Laserstrahls und eines Gesichtsfelds des Sensors von der Richtung der Azimutachse in einem Elevationswinkel von zumindest 90° ausgebildet. Hierdurch kann der Laserstrahl und das Gesichtsfeld in eine beliebige Richtung innerhalb eines zumindest halbraumgroßen Bereichs gelenkt werden. Die Azimutachse ist hierbei die Drehachse bei einem Drehen des Gesichtsfelds beziehungsweise Laserstrahls in Azimutrichtung. Zweckmäßigerweise kann der Laserstrahl und das Gesichtsfeld über die Azimutachse hinaus geschwenkt werden, sodass kein Anschlag bei einem Blick in die Richtung der Azimutachse ein Nachführen der Sichtlinie stört.

Eine besonders exakte Mitführung des Laserstrahls mit dem Gesichtsfeld kann erreicht werden, wenn die Strahlengänge des optischen Erfassungssystems und des optisch aktiven Systems konzentrisch im Strahlführungssystem geführt sind. Der einfallende Strahlengang des optischen Erfassungssystems umschließt hierbei zweckmäßigerweise den herausführenden Strahlengang des Lasers.

Je nach Aufgabe des optisch aktiven Systems kann dieses mehrere Laserquellen umfassen, beispielsweise zur Abtastung der Umgebung, zum Blenden oder zum Zerstören von anderen, angeleuchteten Sensoren. Zur automatischen Synchronisierung sind die Laserstrahlen dieser unterschiedlichen Laserquellen vorteilhafterweise gemeinsam über das Strahlführungssystem zum Lenken in die Umgebung geführt. Um eine kompakte Strahlführung zu ermöglichen, sind die Laserstrahlen, auch bei unterschiedlicher Ausrichtung der Laserquellen, konzentrisch in das Strahlführungssystem eingekoppelt.

Sind bei einer Verwendung mehrerer Laser diese unterschiedlichen Aufgaben zugewiesen, so kann es sein, dass diese Aufgaben am besten mit unterschiedlichen Frequenzen des Laserlichts gelöst werden können. Dies führt zu einem unterschiedlichen Brechen in optischen Medien und bei einem Bewegen der optischen Medien zur unterschiedlichen Auslenkung der Laserstrahlen. Diesem Nachteil kann begegnet werden, wenn das Strahlführungssystem ein reines Spiegelsystem ist. Ein Durchtreten der Laserstrahlen und/oder von zum Sensor einfallender Strahlung durch optische Medien und damit verbundene Nachteile können vermieden werden. Um eine hohe Beweglichkeit des Laserstrahls und des Gesichtsfelds zu ermöglichen umfasst das Spiegelsystem zweckmäßigerweise mehrere Spiegel. Sind alle Spiegel des Spiegelsystems Planspiegel, so kann durch eine Bewegung der Spiegel hervorgerufenen optischen Verzerrungen entgegengewirkt werden.

In einer weiteren vorteilhaften Ausführungsform der Erfindung umfasst das Spiegelsystem drei Spiegel, die um eine gemeinsame Drehachse drehbar sind. Eine Bewegungsmechanik zur Nachführung der Sichtlinie kann einfach gehalten sein.

Bei schnellen Bewegungen des Fahrzeugs oder Flugzeugs, auf dem die Vorrichtung montiert sein kann, ist das Strahlführungssystem entsprechend schnell zu bewegen, um die Sichtlinie gut zu stabilisieren. Hierbei ist es vorteilhaft, wenn bei einer solchen Bewegung nur eine möglichst geringe Masse zu bewegen ist. Die Masse des Spiegelsystems kann gering gehalten werden, wenn zumindest die Mehrzahl von dessen Spiegeln auf einer gemeinsamen Drehachse liegen. Zweckmäßigerweise umfasst das Spiegelsystem drei Spiegel, wovon zwei auf der gemeinsamen Drehachse liegen. Es kann hierdurch einen hohe Beweglichkeit des Gesichtsfelds bei einer geringen zu bewegenden Masse erreicht werden.

Vorteilhafterweise ist ein Einkoppelstrahl des optisch aktiven Systems in das Strahlführungssystem parallel zur Drehachse ausgerichtet. Der Einkoppelstrahl, also der Laserstrahl am Ort der Einkoppelung in das Strahlführungssystem, muss bei einer Bewegung des Strahlführungssystems nicht mitbewegt werden, wodurch eine Mechanik einfach gehalten bleiben kann.

Weiter vorteilhafterweise ist der mittlere Spiegel zwischen 1° und 15° zur gemeinsamen Drehachse verkippt. Hierdurch kann ein breiter Strahlengang auf den Spiegeln in einer kompakten Weise geführt werden.

Eine hohe Beweglichkeit in Elevationsrichtung kann erreicht werden, wenn das Spiegelsystem eine Anordnung in Form eines Abbe-Koenig-Prismas ist.

In einer vorteilhaften Weiterbildung der Erfindung umfasst die Vorrichtung ein Befestigungsmittel zur Befestigung an einer tragenden Struktur, wobei der optische Sensor und die Laserquelle strukturfest zu der tragenden Struktur bzw. zum Befestigungsmittel angeordnet sind. Hierdurch kann eine bei Stabilisierung der Sichtlinie zu bewegende Masse sehr gering gehalten werden. Außerdem hat diese Ausführungsform den Vorteil, dass bewegende Teile und auch Elemente des Strahlführungssystems innerhalb der Flugzeughülle oder Fahrzeughülle montiert werden können und der Teil der Vorrichtung, der über die Flugzeug- oder Fahrzeughülle herausragen muss, sehr klein bleiben kann.

Eine weitere vorteilhafte Ausführungsvariante der Erfindung sieht vor, dass die Vorrichtung einen Dom aufweist, der zumindest bereichsweise im infraroten Spektralbereich transparent ist. Der Dom schützt über die Fahrzeug- oder Flugzeughülle hinausragenden Teile der Vorrichtung und erlaubt ein Passieren der optischen Strahlung im infraroten Spektralbereich. Zweckmäßigerweise ist der Dom im Spektralbereich zwischen 0,5 µm und 10 µm transparent, um ein Wirken mehrerer unterschiedlicher Anwendungen zu erlauben.

Der Dom kann in einem zumindest halbraumgroßen Bereich transparent sein und insbesondere in seinem transparenten Bereich in einem Stück gefertigt sein. Zur leichteren Herstellbarkeit kann der Dom aus mehreren Segmenten aufgebaut sein. In diesem Fall ist zwar mit leichten Störeffekten an den Fügestellen zu rechnen, diese können jedoch bei vielen Anwendungen toleriert werden. Alternativ kann ein transparentes Domsegment in eine Struktur aus nicht transparentem Dommaterial eingepasst werden. Diese Lösung hat den Vorteil einer sehr großen mechanischen Stabilität bei niedrigen Kosten. Dabei ist es allerdings notwendig, dass der Dom in Azimutrichtung bewegt wird, um ein Mitführen mit dem Gesichtsfeld bzw. dem Laserstrahl zu erlauben.

Eine besonders hohe Strahlstabilität beziehungsweise Sichtlinienstabilität kann erreicht werden, wenn der Dom strukturfest, also unbeweglich fest, mit einer den Dom tragenden Struktur des Flugzeugs oder Fahrzeugs, beispielsweise einer Fahrzeughülle oder Flugzeughülle, verbunden ist. Dazu ist der Dom rundum und insbesondere auch in Richtung der Azimutachse transparent, sodass das Gesichtsfeld in jede Richtung durch den strukturfesten Dom gerichtet werden kann. Eine Beeinflussung der optischen Strahlen durch am Dom angreifende aerodynamische Kräfte kann vermieden werden.

Vorteilhafterweise ist der Dom zumindest in einem Halbkugelbereich sphärisch. Durch eine derart symmetrische Domstruktur kann deren optische Wirkung auf den Strahl oder das Gesichtsfeld unabhängig vom Azimutwinkel und Elevationswinkel gehalten sein. Die optische Wirkung des Doms kann für alle Azimut- und Elevationswinkel gleich sein und wie ein zentriertes optisches Element wirken und kann so auf einfache Weise in das optische Design der Vorrichtung integriert werden. Die optische Wirkung des Doms kann zum Beispiel durch ein leichtes Defokussieren der Optik kompensiert werden.

Ein optisch störender Einfluss des Doms kann besonders gering gehalten werden, wenn eine Drehachse des Strahlführungssystems durch ein Symmetriezentrum des Doms verläuft. Bei einer sphärischen Ausgestaltung des Doms wäre das Symmetriezentrum das Kugelzentrum des Doms, bei einer rotationssymmetrischen Ausgestaltung ein Punkt auf der Symmetrieachse.

Optische Störungen des Doms können weiter minimiert werden, wenn zwei Drehachsen des Strahlführungssystems durch ein Symmetriezentrum des Doms verlaufen. Diese Drehachsen stehen zweckmäßigerweise senkrecht zueinander.

Liegt ein Auskoppelpunkt des optisch aktiven Systems aus dem Strahlführungssystem im Symmetriezentrum des Doms, so wirkt sich dies ebenfalls vorteilhaft auf eine geringe optische Beeinflussung des Laserstrahls durch den Dom aus. Zweckmäßigerweise ist auch der Einkoppelpunkt für einfallende Strahlung aus dem Gesichtsfeld in das Strahlführungssystem im Symmetriezentrum.

Weitere Vorteile ergeben sich aus der folgenden Zeichnungsbeschreibung, in der ein Ausführungsbeispiel der Erfindung dargestellt ist. Die Zeichnung und die Beschreibung enthalten zahlreiche Merkmale in Kombination, die der Fachmann zweckmäßigerweise auch einzeln betrachten und zu sinnvollen weiteren Kombinationen zusammenfassen wird.

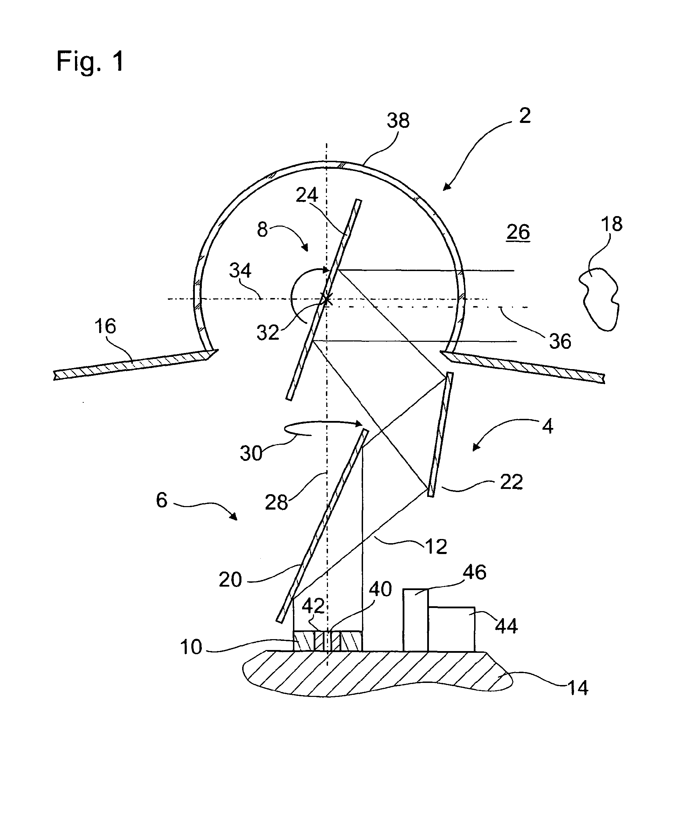

Hierbei zeigt die einzige Figur eine Vorrichtung 2 mit einem optischen Erfassungssystem 4 und einem optisch aktiven System 6, die beide ein gemeinsames Strahlführungssystem 8 umfassen. Das optische Erfassungssystem 4 ist mit einem Sensor 10 ausgerüstet, der als Matrixdetektor mit einer Vielzahl von Detektorelementen ausgeführt sein kann, die jeweils zur Aufnahme eines Pixels eines Gesamtbilds dienen. Der Sensor 10 ist in Figur 1 nur schematisch angedeutet und kann angeordnet sein wie gezeigt oder an einem anderen Ort und über weitere optische Elemente mit dem Strahlengang 12 des Strahlführungssystems 8 verbunden sein. Der Strahlengang 12 kann über ein oder mehrere nicht dargestellte optische Elemente, beispielsweise eine Linse, auf den Sensor 10 gerichtet sein, sodass Strahlengang 12 und Sensor 10 zur Abbildung einer Objektszene 18 aneinander angepasst sind. Auf jeden Fall ist der Sensor 10 mit einer tragenden Struktur 14 fest verbunden, die ortsfest und unbeweglich in beispielsweise einem Flugzeug oder Fahrzeug angeordnet ist. In gleicher Weise ist eine äußere Hülle 16 des Fahrzeugs oder Flugzeugs ortsfest und somit relativ zur tragenden Struktur 14 unbeweglich. Auf eine Darstellung von Befestigungsmitteln zur Befestigung der Vorrichtung 2 an der tragenden Struktur 14 wurde aus Gründen der Übersichtlichkeit verzichtet.

Neben dem Sensor 10 ist auch das Strahlführungssystem 8 Bestandteil des optischen Erfassungssystems 4. Das Strahlführungssystem 8 besteht aus drei optischen Elementen, die als Spiegel 20, 22, 24 ausgeführt sind und die relativ zur tragenden Struktur 14 beweglich gelagert sind. Die drei Spiegel 20, 22, 24 sind nur schematisch und ohne eine entsprechende bewegliche Befestigung an der tragenden Struktur dargestellt. Sie lenken den Strahlengang 12 durch das Strahlführungssystem 8, wobei der letzte Spiegel 24 den Strahlengang 12 in eine Umgebung 26 außerhalb des Fahrzeugs oder Flugzeugs auskoppelt. Die drei Spiegel 20, 22, 24 sind alle drei um eine erste Drehachse 28 drehbar, wie durch einen Pfeil 30 angedeutet ist. Bezüglich dieser Rotation sind die drei Spiegel 20, 22, 24 starr zueinander angeordnet, sodass die Rotation eines der Spiegel 20, 22, 24 um die Drehachse 28 eine äquivalente Rotation der anderen Spiegel 20, 22, 24 um die Drehachse 28 erzwingt. Während jedoch die beiden Spiegel 20, 22 relativ zueinander fixiert positioniert sind, ist der Spiegel 24 um eine weitere Drehachse 32 drehbar, die senkrecht zur Drehachse 28 und senkrecht zur Papierebene der Figur 1 ausgerichtet ist und die Drehachse 28 schneidet.

Durch die Drehbarkeit der Spiegel 20, 22, 24 um die Drehachse 28 kann ein Gesichtsfeld des Sensors 10 um 360° in Azimutrichtung gedreht werden, was eine Rundumsicht erlaubt. Durch die zusätzliche Drehbarkeit des Spiegels 24 um die Drehachse 32 ist eine Elevation des Gesichtsfelds um mehr als 90° möglich. Bei der in Figur 1 dargestellten Ausrichtung des Blickfelds wird der Strahlengang 12 parallel zu einer Achse 34 ausgekoppelt, die senkrecht zur Drehachse 28 ist. Er kann ohne Abschattung durch die Hülle 16 auch noch wenige Grad tiefer ausgekoppelt werden. Durch eine entsprechende Drehung des Spiegels 24 kann das Blickfeld in die Richtung der Azimutachse, die identisch mit der Drehachse 28 ist, und darüber hinaus verschwenkt werden. Auf diese Weise kann ein Verschwenken des Blickfelds in Elevationsrichtung um mehr als 90° erreicht werden.

Die Anordnung der drei Spiegel 20, 22, 24 ist so, dass aus der Objektszene 18 einfallende Strahlung parallel zur Drehachse 28 und insbesondere konzentrisch um die Drehachse 28 am Spiegel 20 aus dem Strahlführungssystem 8 ausgekoppelt wird. Hierdurch ist die ausgekoppelte Strahlung in ihrer Ausrichtung unabhängig von einer Drehung des Strahlführungssystems 8 um die Drehachse 28. Die Möglichkeit zur Führung eines breiten Strahlengangs auf engstem Raum wird außerdem begünstigt durch die Spiegelanordnung in Form eines Abbe-Koenig-Prismas. Hierbei bewirkt der erste Spiegel 20 eine Strahlablenkung von 45° verbunden mit einer Bildumkehr, und der folgende Spiegel 22 greift die Strahlablenkung auf, indem er zwischen 1° und 15°, in diesem Ausführungsbeispiel um etwa 4°, zur Drehachse 28 verkippt ist, wodurch die Führung eines sehr breiten Strahlengangs auf engstem Raum erlaubt wird.

Um eine weite Schwenkbarkeit in Elevationsrichtung zu erreichen und die Spiegelanordnung hierbei dennoch kompakt zu halten, ist eine Mittelachse 36 des durch den Spiegel 24 aus dem Strahlführungssystem 8 senkrecht zur Drehachse 28 ausgekoppelten Strahlengangs parallel zur Achse 34 angeordnet, die durch die Drehachsen 28, 32 verläuft.

Nach außen ist das Strahlführungssystem 8 durch einen Dom 38 geschützt, der über mehr als einen Halbraum für infrarote Strahlung transparent ist. Der transparente Bereich des Doms 38, beispielsweise aus Zinksulfit, ist sphärisch ausgeführt und so angeordnet, dass sein Symmetriezentrum, also sein Kugelzentrum, auf der Drehachse 28 liegt. Insbesondere liegt das Kugelzentrum außerdem auf der Drehachse 32 des Spiegels 24. Hierdurch trifft der aus dem Strahlführungssystem 8 in die Umgebung 26 ausgekoppelte Strahlengang stets im gleichen Winkel auf den Dom 38, wodurch optische Störungen durch eine Bewegung des ausgekoppelten Strahlengangs bei einer Rotation des Spiegels 24 um die Drehachse 28 oder 32 vermieden werden. Ein Auskoppelpunkt des Strahlengangs 12 am Spiegel 24 aus dem Strahlführungssystem 8 in die Umgebung 26 liegt im Symmetriezentrum des Doms 38.

Alternativ kann ein kleineres transparentes Domsegment in eine Hülle aus weitgehend beliebigem Material eingepasst werden. Diese Lösung hat den Vorteil einer hohen mechanischen Stabilität und geringer Kosten. Dabei ist es allerdings notwendig, dass die Hülle in Azimutrichtung relativ zur Hülle 16 beweglich ausgeführt ist und ein entsprechender Antrieb muss vorgesehen sein.

Der Dom 38 ist strukturfest zur tragenden Struktur 14 und zur Hülle 16 ausgebildet, so dass er sehr unempfindlich gegen aerodynamische Störungen ist. Außerdem ist durch seine strukturfeste Anordnung und die Beweglichkeit des Strahlführungssystems 8 eine Bewegung des Doms 38, beispielsweise eine Vibration, von der Bewegung des Strahlführungssystems 8 entkoppelt, wodurch dieses auch bei einer sehr schnellen Führung des Doms 38 durch Luft, beispielsweise bei einem schnellen Flug eines Flugzeugs, präzise arbeiten kann.

Zusätzlich zum optischen Erfassungssystem 4 verfügt die Vorrichtung 2 über das optisch aktive System 6. Dieses umfasst einerseits ebenfalls das Strahlführungssystem 8 und andererseits eine Laserquelle 40 und beispielsweise eine zweite Laserquelle 42, die beide in der Zeichnung nur schematisch angedeutet sind. Laserstrahlen aus den Laserquellen 40, 42 sind hierbei so geführt, dass der Strahlengang 12 des optischen Erfassungssystems 4 und zumindest ein Laserstrahl aus einer der Laserquellen 40, 42 konzentrisch sind. Beide Laserstrahlen aus den Quellen 40, 42 liegen innerhalb des Strahlengangs 12 des optischen Erfassungssystems 4. Die Laserstrahlen, die über das Strahlführungssystem 8 in die Umgebung 26 gerichtet werden, werden parallel zur Drehachse 28 in das Strahlführungssystem 8 eingekoppelt und treffen somit parallel zur Drehachse 28 auf den ersten Spiegel 20 auf. Auch die beiden Laserquellen 40, 42 können wie in Figur 1 dargestellt oder woanders angeordnet sein und dann über weitere optische Elemente parallel zur Drehachse 28 in das Strahlführungssystem 8 eingekoppelt werden. Ein Auskoppelpunkt zumindest eines der Laserstrahlen aus dem Strahlführungssystem 8 am Spiegel 24 liegt hierbei im Symmetriezentrum des Doms 38, sodass dieser Laserstrahl stets senkrecht den Dom 38 durchtritt.

Eine Bewegung des Strahlführungssystems 8 wird durch ein Steuermittel 44 in Verbindung mit einem oder mehreren Antrieben 46 durchgeführt, die in der Figur nur schematisch angedeutet sind. Das Steuermittel 44 ist außerdem zur Auswertung des Sensors 10 vorgesehen und steuert eine Bildverarbeitung der Aufnahmen der Objektszene 18. Mit der Bewegung des Strahlführungssystems 8 steuert das Steuermittel 44 außerdem eine Ausrichtung eines oder mehrer Laserstrahlen in die Umgebung 26, und es steuert eine Aktivität der Laserquellen 40, 42.

### Bezugszeichenliste

- 2: Vorrichtung
- 4: Erfassungssystem
- 6: System
- 8: Strahlführungssystem
- 10: Sensor
- 12: Strahlengang
- 14: Struktur
- 16: Hülle
- 18: Objektszene
- 20: Spiegel
- 22: Spiegel
- 24: Spiegel
- 26: Umgebung
- 28: Drehachse
- 30: Pfeil
- 32: Drehachse
- 34: Achse
- 36: Mittelachse
- 38: Dom
- 40: Laserquelle
- 42: Laserquelle
- 44: Steuermittel
- 46: Antrieb

## Patentansprüche

1. Vorrichtung (2) mit einem optischen Erfassungssystem (4), das einen optischen Sensor (10) und optische Elemente umfasst, die ein Strahlführungssystem (8) bilden, das eine um 360° Azimutwinkel reichende Rundumsicht des Sensors (10) in eine Umgebung (26) gewährt, und mit einem optisch aktiven System (6) zum Aussenden eines Laserstrahls aus einer Laserquelle (40, 42) in die Umgebung (26),
**dadurch gekennzeichnet,**
**dass** das Strahlführungssystem (8) zum Lenken des Laserstrahls in die Umgebung (26) ausgebildet ist.

2. Vorrichtung (2) nach Anspruch 1,
**dadurch gekennzeichnet,**
**dass** das Strahlführungssystem (8) zum Schwenken des Laserstrahls und eines Gesichtsfelds des Sensors (10) von der Richtung der Azimutachse in einem Elevationswinkel von zumindest 90° ausgebildet ist.

3. Vorrichtung (2) nach Anspruch 1 oder 2,
**dadurch gekennzeichnet,**
**dass** Strahlengänge (12) des optischen Erfassungssystems (4) und des optisch aktiven Systems (4) konzentrisch im Strahlführungssystem (8) geführt sind.

4. Vorrichtung (2) nach einem der vorhergehenden Ansprüche,
**dadurch gekennzeichnet,**
**dass** das optisch aktive System (6) zwei unterschiedliche Laserquellen (40, 42) umfasst, deren Laserstrahlen über das Strahlführungssystem (8) zum Lenken in die Umgebung (26) geführt sind.

5. Vorrichtung (2) nach einem der vorhergehenden Ansprüche,
**dadurch gekennzeichnet,**
**dass** das Strahlführungssystem (8) ein reines Spiegelsystem ist.

6. Vorrichtung (2) nach Anspruch 5,
**dadurch gekennzeichnet,**
**dass** das Spiegelsystem drei Spiegel (20, 22, 24) umfasst, die um eine gemeinsame Drehachse (28) drehbar sind und/oder
**dass** eine Mehrzahl der Spiegel (20, 22, 24) des Spiegelsystems auf einer gemeinsamen Drehachse (28) liegen.

7. Vorrichtung (2) nach Anspruch 6,
**dadurch gekennzeichnet,**
**dass** ein Einkoppelstrahl des optisch aktiven Systems (6) in das Strahlführungssystem (8) parallel zur Drehachse (28) ausgerichtet ist.

8. Vorrichtung (2) nach Anspruch 7,
**dadurch gekennzeichnet,**
**dass** der mittlere Spiegel (22) zwischen 1° und 15° zur gemeinsame Drehachse (28) verkippt ist.

9. Vorrichtung (2) nach einem der Ansprüche 5 bis 8,
**dadurch gekennzeichnet,**
**dass** das Spiegelsystem in Form eines Abbe-Koenig-Prismas aufgebaut ist.

10. Vorrichtung (2) nach einem der vorhergehenden Ansprüche,
**gekennzeichnet**
**durch** ein Befestigungsmittel zur Befestigung an einer tragenden Struktur (14), wobei der optische Sensor (10) und die Laserquelle (40, 42) strukturfest zu der tragenden Struktur (14) angeordnet sind.

11. Vorrichtung (2) nach einem der vorhergehenden Ansprüche,
**gekennzeichnet,**
**durch** einen Dom (38), der zumindest bereichsweise im infraroten Spektralbereich transparent ist und/oder der zumindest im Halbkugelbereich sphärisch ist.

12. Vorrichtung (2) nach Anspruch 11,
**gekennzeichnet**
**durch** ein Befestigungsmittel zur Befestigung an einer tragenden Struktur (14), wobei der Dom (38) strukturfest zu der tragenden Struktur (14) ausgebildet ist.

13. Vorrichtung (2) nach einem der Ansprüche 11 oder 12,
**dadurch gekennzeichnet,**
**dass** eine Drehachse (28, 32) des Strahlführungssystems (8) durch ein Symmetriezentrum des Doms (38) verläuft.

14. Vorrichtung (2) nach einem der Ansprüche 11 bis 13,
**dadurch gekennzeichnet,**
**dass** zwei Drehachsen (28, 32) des Strahlführungssystems (8) durch ein Symmetriezentrum des Doms (38) verlaufen.

15. Vorrichtung (2) nach einem der Ansprüche 11 bis 14,
**dadurch gekennzeichnet,**
**dass** ein Auskoppelpunkt des optisch aktiven Systems (6) aus dem Strahlführungssystem (8) im Symmetriezentrum des Doms (38) liegt.
